# EUROPÄISCHE PATENTSCHRIFT

(11) **EP 3 679 286 B1**
(45) Veröffentlichungstag und Bekanntmachung des Hinweises auf die Patenterteilung: **12.10.2022**
(21) Anmeldenummer: 18765852.1
(22) Anmeldetag: 05.09.2018
(51) Int. Cl.: F16L 37/092

(54) **VERBINDUNGSANORDNUNG FÜR ROHRE**
CONNECTING ARRANGEMENT FOR PIPES
SYSTÈME DE RACCORD POUR TUYAUX

(30) Priorität: 06.09.2017 DE 102017215675
(43) Veröffentlichungstag der Anmeldung: 15.07.2020
(73) Patentinhaber: Fränkische Rohrwerke Gebr. Kirchner GmbH & Co. KG, 97486 Königsberg (DE)
(72) Erfinder: HÜMPFNER, Michael, 97437 Prappach (DE); GEHRING, Toni, 97437 Haßfurt (DE)
(74) Vertreter: Herzog, Markus
(86) Internationale Anmeldenummer: PCT/EP2018/073830
(87) Internationale Veröffentlichungsnummer: WO 2019/048460

(56) Entgegenhaltungen:
- EP-A2- 2 180 224
- DE-A1-102013 109 123
- JP-A- 2002 081 587
- JP-A- 2002 174 383
- JP-A- 2003 314 775

## Beschreibung

Die Erfindung betrifft eine Verbindungsanordnung zum Anschließen des freien Endes eines nicht zur Verbindungsanordnung gehörenden Rohres gemäß dem Oberbegriff des Anspruchs 1.

Eine derartige Verbindungsanordnung ist beispielsweise aus der EP 2 169 293 A1 bekannt. Zur Herstellung der Verbindung eines Rohrs mit der Verbindungsanordnung muss das Rohr auf der Baustelle zunächst abgelängt und entgratet werden. Anschließend wird es in den Aufnahmeraum eingeführt, wo es gegen Mitnahmefinger der Anzeigevorrichtung stößt und die Anzeigevorrichtung mitnimmt, bis diese durch Öffnungen, die hierzu in der Außenhülse vorgesehen sind, sichtbar wird und somit anzeigt, dass das Rohr in ausreichendem Maße in den Aufnahmeraum eingeführt worden ist. Im rauen Baustellenalltag bleibt das korrekte Entgraten des Rohrs nach dem Ablängen meist eine reine Wunschvorstellung. Daher besteht bei der gattungsgemäßen Verbindungsanordnung beim Einführen des Rohrs in den Aufnahmeraum die Gefahr einer Beschädigung der Dichtungsvorrichtung durch an dem abgelängten Ende des Rohrs noch vorhandene Grate.

Es bestand daher Bedarf nach einer Verbindungsanordnung mit Vorkehrungen zum Schutz der Dichtungsvorrichtung.

Hierzu war bereits in der EP 1 219 883 A2 vorgeschlagen worden, eine Schutzhülse vorzusehen, die die Dichtungsvorrichtung in dem mit dem Rohr noch nicht verbundenen Zustand der Verbindungsanordnung überdeckte und erst infolge des Eingriffs des Rohrs mit einer Ringschulter dieser Schutzhülse, d.h. nachdem das nicht oder nur mangelhaft entgratete Ende des Rohrs die Dichtungsvorrichtung passiert hatte, von der Dichtungsvorrichtung abgezogen wurde. In der Praxis hat sich diese Schutzhülse jedoch nicht durchgesetzt, weil sie meist schon vor dem Eingriff des Rohrs mit der Ringschulter von der Dichtungsvorrichtung herunter geschoben wurde und somit die ihr zugedachte Schutzfunktion nicht erfüllen konnte. JP 2003 314775 A, welches als nächstliegender Stand der Technik erachtet wird, offenbart eine Verbindungsanordnung, welche einen rohrförmigen Stützkörper, eine außerhalb des Stützkörpers angeordnete Außenhülse und eine zwischen Außenhülse und Stützkörper aufgenommene Klemmvorrichtung umfasst, wobei die Verbindungsanordnung ferner eine Anzeigevorrichtung und eine Dichtungsvorrichtung umfasst, wobei die Dichtungsvorrichtung von einer Schutzvorrichtung in einer Montagebereitschaftsstellung überdeckt wird. Ferner sei auf die Dokumente DE 10 2013 109 123 A1, EP 2 180 224 A2, JP 2002 174383 A und JP 2002 081587 A hingewiesen.

Es ist daher nach wie vor Aufgabe der Erfindung, eine Verbindungsanordnung der gattungsgemäßen Art derart weiterzubilden, dass sie einen wirksamen Schutz für die Dichtungsvorrichtung bereitstellt.

Diese Aufgabe wird erfindungsgemäß durch eine Verbindungsanordnung nach Anspruch 1 gelöst.

Es ist das Verdienst der Erfinder, dass sie sich durch die Nachteile der EP 1 219 883 A2 nicht entmutigen ließen und nach wie vor das Vorsehen einer Schutzvorrichtung für die, beispielsweise als O-Ring ausgebildete, Dichtungsvorrichtung als mögliche Lösung in Betracht gezogen haben. Die Erfindung geht aber über das bloße Vorsehen einer Schutzvorrichtung weit hinaus. Es ist nämlich das weitere Verdienst der Erfinder, sich erstmals die

Tatsache zunutze gemacht zu haben, dass sowohl die Schutzvorrichtung als auch die, auch vorzugsweise als Anzeigering ausgebildete, Anzeigevorrichtung durch das Einführen des Rohrs verschoben werden, und zwar in der gleichen Richtung, wenn auch nicht um die gleiche Distanz, dass es aber durch entsprechende Ausbildung gleichwohl möglich ist, die Schutzvorrichtung und die Anzeigevorrichtung betriebsmäßig miteinander zu verbinden. Durch diese betriebsmäßige Verbindung, vorzugsweise einstückige Ausbildung, der Schutzvorrichtung und der Anzeigevorrichtung kann die Masse der Gesamtanordnung beider Vorrichtungen erhöht werden. Sie setzt somit dem Rohr beim Einführen mehr Widerstand entgegen als dies bei der aus der EP 1 219 883 A2 bekannten Schutzhülse der Fall war. Zudem erstreckt sich die Gesamtanordnung von radial innen, d.h. von dem von der Schutzvorrichtung unmittelbar umgebenen Rohrstück, bis nach radial außen, d.h. zu den in der Anzeigestellung von der Anzeigevorrichtung überdeckten Öffnungen der Außenhülse, was wiederum die Stabilität der Gesamtanordnung beider Vorrichtungen in dem Aufnahmeraum erhöht.

Die Schiebevorrichtung kann vorteilhafterweise aus thermoplastischem Kunststoff hergestellt sein, beispielsweise Polyethylen und/oder Polypropylen.

Um vermeiden zu können, dass die Dichtungsvorrichtung dem in den Aufnahmeraum eingeführten Rohr erst durch den Eingriff mit dem Rohr ausweicht, um mit dessen Innenfläche in Dichtungseingriff treten zu können, wird in Weiterbildung der Erfindung vorgeschlagen, dass die Dichtungsvorrichtung in der Montagebereitschaftsstellung von der Schiebevorrichtung in der Nut radial komprimiert ist. Hat das Rohr beim Einführen in die Verbindungsanordnung die Schiebevorrichtung von der Dichtungsvorrichtung heruntergeschoben, so tritt die Dichtungsvorrichtung gleichwohl nicht sofort mit der Innenfläche des Rohrs in Dichtung Eingriff. Vielmehr benötigt die Dichtungsvorrichtung eine gewisse Zeit, um sich wieder zu entspannen. Diese Zeit reicht aus, damit die Dichtungsvorrichtung während der Vorüberbewegung des Rohrendes nicht mit dort etwaig vorhandenen Graten und dergleichen möglicherweise eine Beschädigung der Dichtungsvorrichtung verursachenden Vorsprüngen ausreichend bzw. übermäßig in Kontakt treten kann.

Darüber hinaus kann die Dichtungseinheit als O-Ring ausgebildet sein.

Neben dem mangelhaften Entgraten besteht ein weiteres Problem mit dem auf Baustellen oft recht unpräzisen Umgang mit abzulängenden Rohren darin, dass die Rohre nicht genau im rechten Winkel zur Rohrachse abgelängt werden, sondern schräg. Dies führt dazu, dass ein Umfangsabschnitt des Rohrendes früher mit der Schiebevorrichtung in Eingriff treten kann als die anderen Umfangsabschnitte. Dies kann schlimmstenfalls ein Verkanten der Schiebevorrichtung im Aufnahmeraum sowie das einseitige Herausdrücken der Dichtungseinheit nach sich ziehen. Um einem derartigen Verkanten vorbeugen zu können, kann daher vorgesehen sein, dass an der dem Rohr zugewandten Ende der Schiebevorrichtung ein elastisches Pufferelement angeordnet ist. Trifft ein schräg abgelängtes Rohr mit seinem vorauslaufenden Umfangsabschnitt auf das Pufferelement auf, so komprimiert es das Pufferelement in diesem Bereich, bis auch der nachlaufende Umfangsabschnitt mit dem Pufferelement in Anlage- und Kompressionseingriff getreten ist. Dies führt zu einer gleichmäßigeren Kraftübertragung zwischen Rohr und Schiebevorrichtung und beugt somit einem Verkanten der Schiebevorrichtung in dem Aufnahmeraum vor. Ferner kann das Pufferelement die Dichtungsvorrichtung vor Graten schützen, die sich gegebenenfalls noch am Rohrende befinden, da sie diese in sich aufnimmt und umschließt, bevor sie mit der Dichtungsvorrichtung in Kontakt gelangen.

Beispielsweise kann das Pufferelement aus einem thermoplastischen Elastomer hergestellt sein. Ferner können das Pufferelement und die Schiebevorrichtung beispielweise als Zweikomponenten-Spritzgussteil miteinander einstückig ausgebildet sein.

Alternativ oder zusätzlich zu dem Pufferelement kann mit der Schiebevorrichtung ein Ausgleichselement verbunden sein, welches mit der Schiebevorrichtung ein Kugelgelenk bildet, und welches dazu eingerichtet ist, mit einem in die Verbindungsanordnung einzuführenden Ende des Rohrs in Kontakt zu treten. Wird nun ein Rohrende in die Verbindungsanordnung, d.h. in den Aufnahmeraum der Verbindungsanordnung, eingeführt, welches nicht genau im rechten Winkel zur Rohrachse abgelängt worden ist, so kann sich das Ausgleichselement an derjenigen Stelle, an welcher es mit dem Rohrende zuerst in Kontakt tritt, relativ zu der Schiebevorrichtung verlagern.

Dabei kann eine zum Beispiel diametral gegenüberliegende Seite des Ausgleichselements relativ zu der Schiebevorrichtung zumindest translatorisch unverlagert verbleiben. Sobald das zu dem Rohrende weisende Ende des Ausgleichselements mit dem in die Verbindungsanordnung einzuführenden Rohrende großflächig in Kontakt getreten ist, kann das Ausgleichselement zusammen mit dem Rohr, und gegebenenfalls zusammen mit der Schiebevorrichtung, in die Verbindungsanordnung hinein verlagert werden. Hierdurch kann eine Krafteinwirkung des Rohrs auf die Schiebevorrichtung, im Falle eines schräg abgelängten Rohrs, besser auf die Schiebeeinrichtung übertragen bzw. verteilt werden, wodurch ein Verkannten der Schiebevorrichtung im Aufnahmeraum sowie das einseitige Herauszurücken der Dichtungseinheit verhindert werden kann.

Vorteilhafterweise kann das Ausgleichselement an seiner zu dem in die Verbindungsanordnung einzuführenden Ende des Rohrs weisenden Seite eine Mehrzahl von in Umfangsrichtung des Ausgleichselements verteilten Ausnehmungen aufweisen. Durch eine Unterbrechung des zu dem Rohr weisenden Endes der Ausgleichseinheit kann ein Durchmesser dieses Endes des Ausgleichselements federnd nach radial außen aufgeweitet werden. Hierdurch kann das Ausgleichselement dazu eingerichtet sein, teilweise oder vollständig auf die Schiebevorrichtung aufgeschoben werden zu können.

Insbesondere kann das Ausgleichselement bzw. die Verbindung des Ausgleichselements zu der Schiebevorrichtung in Form des Kugelgelenks dazu eingerichtet sein, eine relative Verkippung des Ausgleichselements relativ zu der Schiebevorrichtung, d.h. zum Beispiel der beiden Mittelachsen des Ausgleichselements und der Schiebevorrichtung zueinander, um einen Winkel im Bereich von 0° bis 20° insbesondere von 0° bis 11°, zuzulassen.

Ferner kann das Ausgleichselement derart ausgebildet sein, dass, selbst im Fall einer maximalen Verkippung des Ausgleichselements relativ zu der Schiebevorrichtung, stets eine dem in die Verbindungsanordnung einzuführenden Rohrende gegenüberliegende Endfläche des Ausgleichselements mit diesem Rohrende in Kontakt tritt. Vorzugsweise ist diese Endfläche des Ausgleichselements orthogonal zu der Mittelachse des Ausgleichselements angeordnet. Auf diese Weise kann verhindert werden, dass ein Abschnitt des Ausgleichselements einen kürzeren Abstand zu einer Mittelachse des Rohrs, insbesondere im Bereich des Rohrendes, einnimmt als ein radialer Abstand der Mittelachse des Rohrs zu einer Innenwand des Rohrs, insbesondere im Bereich des Rohrendes. Hierdurch kann ferner verhindert werden, dass ein Abschnitt des Ausgleichselements zwischen dem Rohr und einer Komponente der Verbindungsanordnung eingeklemmt wird.

Um die Schiebevorrichtung in der Anzeigestellung halten zu können, wird in Weiterbildung der Erfindung vorgeschlagen, dass die Schiebevorrichtung wenigstens ein Rastelement umfasst, welches dazu ausgebildet und bestimmt ist, in der Anzeigestellung mit einem zugeordneten Gegenrastelement zusammenzuwirken. Wenigstens ein Rastelement kann dabei von einem elastisch auslenkbaren Arm gebildet sein, an dessen freiem Ende ein nach radial innen abstehender Rastvorsprung angeformt sein kann. Demgegenüber kann das Gegenrastelement als Ringrippe ausgebildet sein, welche von dem Stützkörper nach radial außen absteht.

Zur Bereitstellung der Anzeigestellung der Schiebevorrichtung kann vorgesehen sein, dass der Stützkörper eine Ringschulter aufweist, an der die Schiebevorrichtung in der Anzeigestellung anliegt. An dieser Ringschulter des Stützkörpers kann auch die Außenhülse angreifen, insbesondere befestigt sein, um mit dem Stützkörper gemeinsam den Aufnahmeraum zu bilden.

In Weiterbildung der Erfindung wird vorgeschlagen, dass die Schiebevorrichtung mit der Klemmvorrichtung im Sinne der Zentrierung der Klemmvorrichtung relativ zur Längsachse des Stützkörpers zusammenwirkt. Eine derartige Zentrierung der Klemmvorrichtung stellt sicher, dass das Rohr beim Einführen in den Aufnahmeraum mit der Klemmvorrichtung über den gesamten Umfang gleichmäßig in Klemmeingriff tritt. Die Zentrierung kann in einfacher Weise von der Schiebevorrichtung bereitgestellt werden, da sich diese sowohl radial innen als auch radial außen an den Begrenzungswandungen des Aufnahmeraums abstützt und damit im Aufnahmeraum stabil angeordnet ist.

Das zentrierende Zusammenwirken von Klemmvorrichtung und Schiebevorrichtung wird dadurch unterstützt, dass die Schiebevorrichtung einen oder mehrere axiale Durchgänge aufweist, wobei wenigstens ein axialer Durchgang von wenigstens einem Klemmelement der Klemmvorrichtung durchsetzt ist. Dies ermöglicht insbesondere eine flächige Anlage des wenigstens einen Klemmelements an den den axialen Durchgang definierenden Begrenzungswandungen der Schiebevorrichtung, insbesondere an einer radial äußeren Begrenzungswandung.

Vorteilhafterweise wird der wenigstens eine axiale Durchgang auch in der Montagebereitschaftsstellung von wenigstens einem Klemmelement durchsetzt. Auf diese Weise können die Klemmvorrichtung und die Schiebevorrichtung als vormontierte Einheit bereitgestellt und gemeinsam in die Verbindungsanordnung eingebaut werden. Um ein unerwünschtes selbsttätiges Auseinanderfallen der Klemmvorrichtung und der Schiebevorrichtung verhindern zu können, kann vorgesehen sein, dass wenigstens ein Klemmelement seinem freien Ende benachbart an einem radial äußeren Oberflächenabschnitt einen Rückhaltevorsprung aufweist. Dieser Rückhaltevorsprung kann dabei in der Montagebereitschaftsstellung mit einer axial gerichteten Anlagefläche an einer ebenfalls axial gerichteten Gegenanlagefläche der Anzeigevorrichtung anliegen. Um einen über den gesamten Umfang möglichst gleichmäßigen Eingriff der Klemmvorrichtung mit dem Rohr sicherstellen zu können, wird ferner erfindungsgemäß vorgeschlagen, dass die Klemmvorrichtung einen Basisring aufweist, von dem eine Mehrzahl von Klemmelementen in axialer Richtung absteht.

Die Klemmelemente brauchen nicht alle identisch ausgebildet zu sein. Vielmehr kann es sogar vorteilhaft sein, wenn die Mehrzahl von Klemmelementen wenigstens ein erstes Klemmelement und wenigstens ein zweites Klemmelement umfasst, wobei das wenigstens eine erste Klemmelement von dem Basisring um eine größere Länge absteht als das wenigstens eine zweite Klemmelement. Das wenigstens eine zweite Klemmelement hat aufgrund seiner geringeren Länge einen höheren Kraftschluss mit dem Rohr. Seine Aufgabe ist es, dann, wenn auf das Rohr ein axialer Zug ausgeübt wird, eine kraftschlüssige Verbindung mit dem Rohr einzugehen, bis das wenigstens eine erste Klemmelement in einen Bereich der Außenhülse gelangt, in welchem sich diese konisch verjüngt, und somit von der Außenhülse formschlüssig in die Außenfläche des Rohrs hineingedrückt wird. Da somit beim Einführen des Rohrs in die Verbindungsanordnung auf eine kraftschlüssige Verbindung des wenigstens einen ersten Klemmelements mit dem Rohr verzichtet werden kann, kann die zum Einführen des Rohrs erforderliche Einschubkraft gering gehalten werden.

Um das Rohr gleichwohl zuverlässig in der Verbindungsanordnung halten zu können, wird ferner vorgeschlagen, dass sich ein zum Klemmeingriff mit dem Rohr bestimmtes freies Ende des wenigstens einen ersten Klemmelements über einen größeren Umfangswinkel erstreckt als ein zum Klemmeingriff mit dem

Rohr bestimmtes freies Ende des wenigstens einen zweiten Klemmelements. Beispielsweise können einem ersten Klemmelement zwei zweite Klemmelemente zugeordnet sein. Vorteilhafterweise sind die zweiten Klemmelemente in axialer Richtung gesehen hinter dem umfangsbreiteren freien Ende des ersten Klemmelements angeordnet, um mit diesem gemeinsam einen axialen Durchgang der Schiebevorrichtung durchsetzen zu können.

Nachzutragen ist, dass auch die Schiebevorrichtung einen Basisring aufweist. Dieser Basisring kann beispielsweise die Schutzvorrichtung bilden. Ferner ist er über schräg nach radial außen verlaufende Verbindungsstege mit einem die Anzeigevorrichtung bildenden Anzeigering verbunden. Schließlich können von dem Basisring auch noch die Rastelemente ausgehen. Dabei begrenzen der Basisring, der Anzeigering und die Verbindungsstege die für die Klemmelemente bestimmten axialen Durchgänge.

Nachzutragen ist ferner, dass die Farbe der äußeren Oberfläche der Außenhülse und die Farbe der äußeren Oberfläche der Anzeigevorrichtung in an sich bekannter Weise zueinander kontrastierende Farben sein können, um die Erkennbarkeit der Anzeige des ausreichenden Einführens des Rohrs in den Aufnahmeraum verbessern zu können. In diesem Zusammenhang ist darauf hinzuweisen, dass auch eine metallische Außenhülse und eine Anzeigevorrichtung aus gefärbtem Kunststoff einen guten Kontrast bilden können. Ferner kann es vorteilhaft sein, wenn die Farbe der äußeren Oberfläche der Außenhülse und die Farbe der äußeren Oberfläche der Klemmvorrichtung zueinander kontrastierende Farben sind. In der Montagebereitschaftsstellung kann man nämlich die Klemmvorrichtung durch die Öffnungen der Außenhülse erkennen. Sind zusätzlich auch die Farben der äußeren Oberfläche der Anzeigevorrichtung und die Farbe der äußeren Oberfläche der Klemmvorrichtung zueinander kontrastierende Farben, so kann beim Übergang von der Montagebereitschaftsstellung in die montierte Stellung die ordnungsgemäße Montage durch den Kontrastwechsel zwischen der Klemmvorrichtung und der Anzeigevorrichtung besonders gut angezeigt werden.

Wie vorstehend bereits teilweise erwähnt, ist es in Weiterbildung der Erfindung ferner möglich, dass die Außenhülse aus Kunststoff oder Metall hergestellt ist, oder/und dass die Klemmvorrichtung aus thermoplastischem Kunststoff hergestellt ist, beispielsweise Polyamid 6, vorzugsweise faserverstärktem, insbesondere glasfaserverstärktem, Polyamid 6, oder/und dass die Schiebevorrichtung einstückig ausgebildet ist, oder/und dass die Dichtungseinheit als O-Ring ausgebildet ist, oder/und dass die Anzeigevorrichtung als Anzeigering ausgebildet ist.

Die Erfindung wird im Folgenden anhand eines Ausführungsbeispiels mit Bezug auf die beigefügten Zeichnungen näher erläutert werden. Es stellt dar:
- Figur 1: eine perspektivische Ansicht einer erfindungsgemäßen Verbindungsanordnung;
- Figur 2: eine orthogonal zur Längsachse L genommene Schnittansicht der erfindungsgemäßen Verbindungsanordnung;
- Figur 3: eine längs der Linie III-III in Figur 2 genommene Schnittansicht der erfindungsgemäßen Verbindungsanordnung;
- Figur 4: eine längs der Linie IV-IV in Figur 2 genommene Schnittansicht der erfindungsgemäßen Verbindungsanordnung;
- Figur 5: eine perspektivische Ansicht der Schiebevorrichtung und der Klemmvorrichtung der erfindungsgemäßen Verbindungsanordnung;
- Figuren 6a und 6b: weitere perspektivische Ansichten zur Erläuterung des Zusammenwirkens der Schiebevorrichtung und der Klemmvorrichtung;
- Figur 7: eine Ansicht ähnlich Figur 3 einer weiteren Ausführungsform einer erfindungsgemäßen Verbindungsanordnung;
- Figur 8: eine Ansicht ähnlich Figur 5 einer zweiten Ausführungsform;
- Figuren 9a und 9b: Ansichten ähnlich Figuren 6a und 6b der zweiten Ausführungsform;
- Figur 10: eine perspektivische Ansicht einer weiteren Ausführungsform der Schiebevorrichtung der erfindungsgemäßen Verbindungsanordnung;
- Figur 11: eine Ansicht ähnlich Figur 7 der erfindungsgemäßen Verbindungsanordnung, umfassend die weitere Ausführungsform der Schiebevorrichtung aus Figur 10, in einem beginnenden Montagezustand; und
- Figur 12: eine zu Figur 11 analoge Ansicht in einem abgeschlossenen Montagezustand,
- Figur 13: eine Ansicht der Komponenten der in Figur 10 dargestellten Ausführungsform.

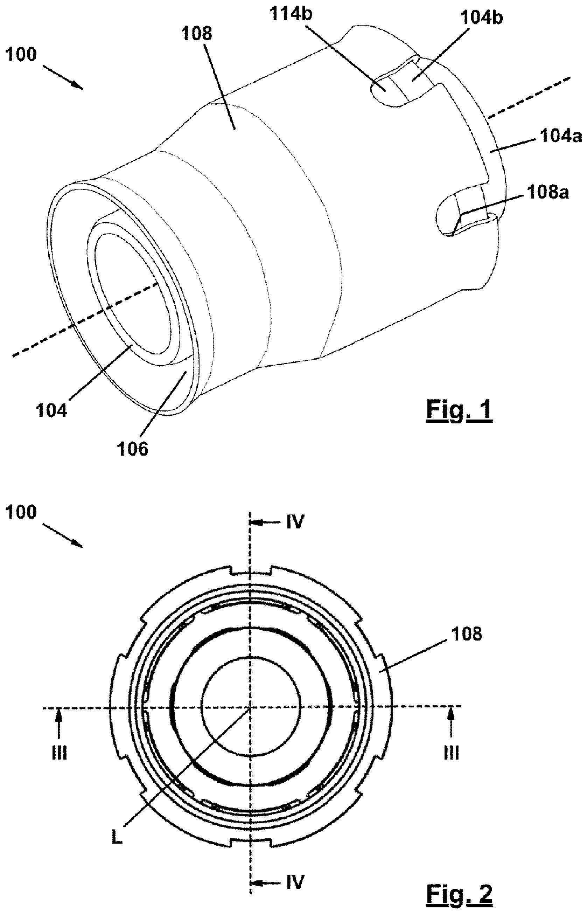

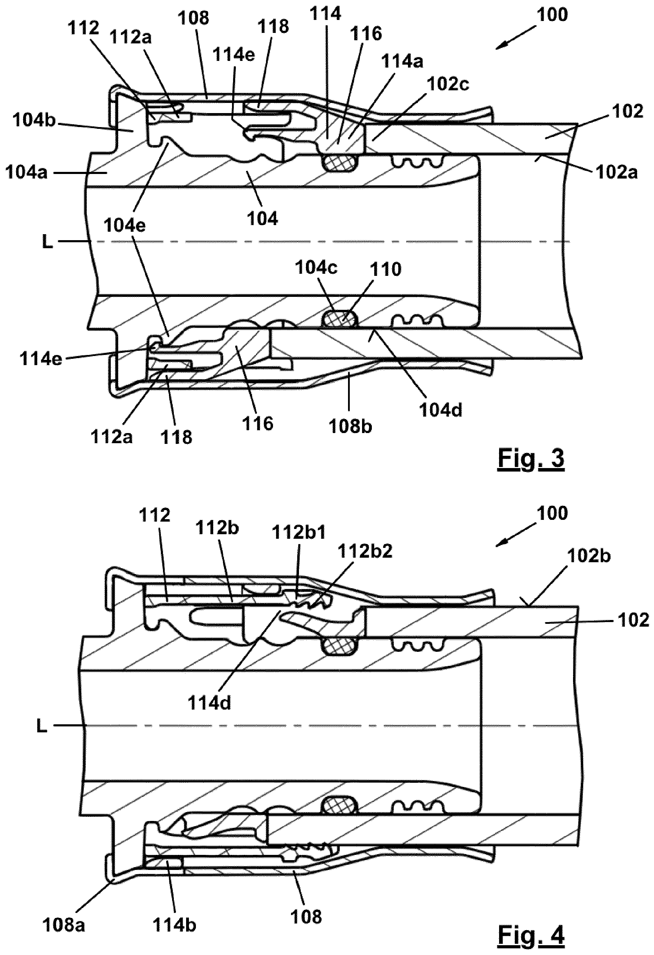

In Figur 1 ist eine erfindungsgemäße Verbindungsanordnung ganz allgemein mit 100 bezeichnet. Die Verbindungsanordnung 100 dient zum Anschluss eines Rohrs 102 (siehe Figur 3) an einer (nicht dargestellten) übergeordneten Baueinheit. Hierzu kann ein rohrförmiger Stützkörper 104 an seinem einen Ende 104a mit einem Außengewinde ausgebildet sein oder alternativ mit der übergeordneten Baueinheit einstückig verbunden sein.

Zur Bildung eines Aufnahmeraums 106 für das Rohr 102 umfasst die Verbindungsanordnung 100 gemäß Figur 3 eine Außenhülse 108, die beispielsweise aus Metall gefertigt sein kann, und an einer Ringschulter 104b des Stützkörpers 104 befestigt ist. Ferner ist in einer Ringnut 104c, die in der äußeren Oberfläche 104b des Stützkörpers 104 ausgebildet ist, ein Dichtungsring 110 aufgenommen, der dazu bestimmt ist, mit der Innenfläche 102a des Rohrs 102 in Dichtungseingriff zu treten (siehe untere Hälfte der Figur 3).

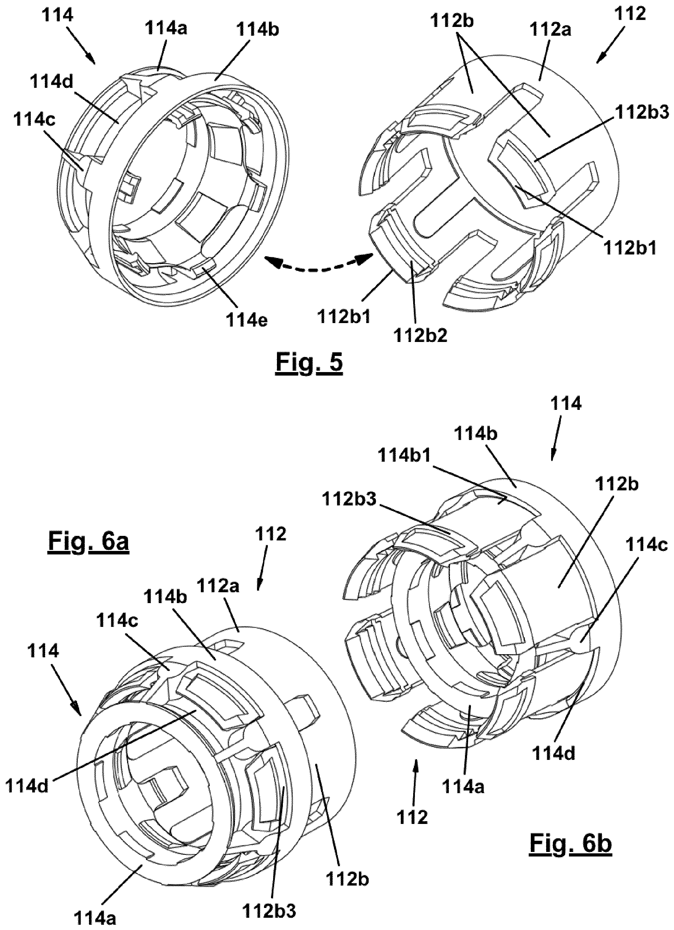

Um das Rohr 102 zuverlässig im Aufnahmeraum 106 halten zu können, umfasst die Verbindungsanordnung 100 ferner eine Klemmvorrichtung 112, die in dem Aufnahmeraum 106 angeordnet ist. Eine perspektivische Ansicht der Klemmvorrichtung 112 ist in Figur 5 rechts dargestellt. Die Klemmvorrichtung 112 umfasst gemäß dem in Figur 5 dargestellten Ausführungsbeispiel einen Basisring 112a (siehe auch Figur 3) sowie insgesamt sechs Klemmelemente 112b (siehe auch Figur 4). Die Klemmelemente 112b sind dazu bestimmt, mit der äußeren Oberfläche 102b des Rohrs 102 in Klemmeingriff zu treten. Hierzu sind die freien Enden 112b1 an ihrer der Oberfläche 102b zugewandten Innenseite mit Widerhakenelementen 112b2 ausgebildet, die formschlüssig in die äußere Oberfläche 102b des Rohrs 102 eingreifen können.

Die Verbindungsanordnung 100 umfasst ferner eine Schiebevorrichtung 114, die erfindungsgemäß eine Mehrzahl von Aufgaben zu erfüllen hat:
Erstens umfasst die Schiebevorrichtung 114 einen Basisring 114a, der in der in den Figuren 3 und 4 jeweils oben dargestellten Montagebereitschaftsstellung dazu dient, den Dichtungsring 110 in der Nut 104c zu komprimieren und so vor dem Eingriff mit gegebenenfalls am freien Ende 102c des Rohrs 102 vorhandenen Graten zu schützen. Der Basisring 114a weist hierzu einen Innendurchmesser auf, der im Wesentlichen gleich dem Außendurchmesser des Rohrstutzens 104 ist, insbesondere gegenüber diesem lediglich um ein Maß größer bemessen ist, das die freie Verschiebbarkeit der Schiebevorrichtung 114 relativ zum Rohrstutzen 104 in Richtung der Längsachse L ermöglicht. Auf diese Weise bildet die Schiebevorrichtung 114 eine Schutzvorrichtung 116 für den Dichtungsring 110.

Zweitens umfasst die Schiebevorrichtung 114 einen Anzeigering 114b, der einen Außendurchmesser aufweist, der im Wesentlichen gleich dem Innendurchmesser der Außenhülse 108 ist, insbesondere gegenüber diesem lediglich um ein Maß kleiner bemessen ist, das die freie Verschiebbarkeit der Schiebevorrichtung 114 relativ zur Außenhülse 108 in Richtung der Längsachse L ermöglicht. In der in den Figuren 3 und 4 jeweils unten dargestellten Montagestellung, in der das Rohr 102 vollständig in den Aufnahmeraum 106 eingeführt worden ist, liegt die Schiebevorrichtung 114 mit dem Anzeigering 114b an der Ringschulter 104b des Stützkörpers 104 an. Auf diese Weise kann der Anzeigering 114c von außen durch Öffnungen 108a erkannt werden, welche in der Außenhülse 108 ausgebildet sind. Auf diese Weise bildet die Schiebevorrichtung 114 auch eine Anzeigevorrichtung 118, die es ermöglicht, die ordnungsgemäße Montage des Rohrs 102 zu überprüfen.

Drittens umfasst die Schiebevorrichtung 114 eine Mehrzahl von Verbindungsstegen 114c, welche den Basisring 114a und den Anzeigering 114b miteinander verbinden. Da der Basisring 114a dem Stützkörper 104 benachbart, d.h. radial innen, angeordnet ist, während der Anzeigering 114b der Außenhülse 108 benachbart, d.h. radial außen, angeordnet ist, verlaufen die Verbindungsstege 114c schräg, nämlich in axialer Richtung zur Ringschulter 104b hin von radial innen nach radial außen. Auf diese Weise umgrenzen der Basisring 114a, der Anzeigering 114b und die Verbindungsstege 114c eine Mehrzahl von axialen Durchgängen 114d. Wie insbesondere in den Figuren 4, 6a und 6b dargestellt ist, sind diese axialen Durchgänge 114d von den Klemmelementen 112b der Klemmvorrichtung 112 durchsetzt. Dabei dienen die axialen Durchgänge 114d zur Führung der Klemmelemente 112b und damit gemeinsam zur Zentrierung der Klemmvorrichtung 112.

Und viertens umfasst die Schiebevorrichtung 114 gemäß den Figuren 3 und 5 eine Mehrzahl von Rastelementen 114e, die dazu bestimmt sind, in der in Figur 3 unten dargestellten montierten Stellung mit zugeordneten Rastvorsprüngen 104e des Stützkörpers 104 zusammenzuwirken, um die Schiebevorrichtung 114 in Anlage gegen die Ringschulter 104b des Stützkörpers 104 zu halten.

In den Figuren 6a und 6b ist ferner dargestellt, dass die Klemmvorrichtung 112 und die Schiebevorrichtung 114 zu einer gemeinsam handhabbaren Baugruppe vormontiert werden können. Um verhindern zu können, dass diese Baugruppe unerwünschterweise wieder in ihre einzelnen Komponenten zerfällt, sind an den freien Enden 112b1 der Klemmelemente 112b Rückhaltevorsprünge 112b3 angeformt, welche in der in Figur 6a dargestellten Montagebereitschaftsstellung an entsprechenden Gegenflächen 114b1 des Anzeigerings 114b anliegen (siehe Figur 6b).

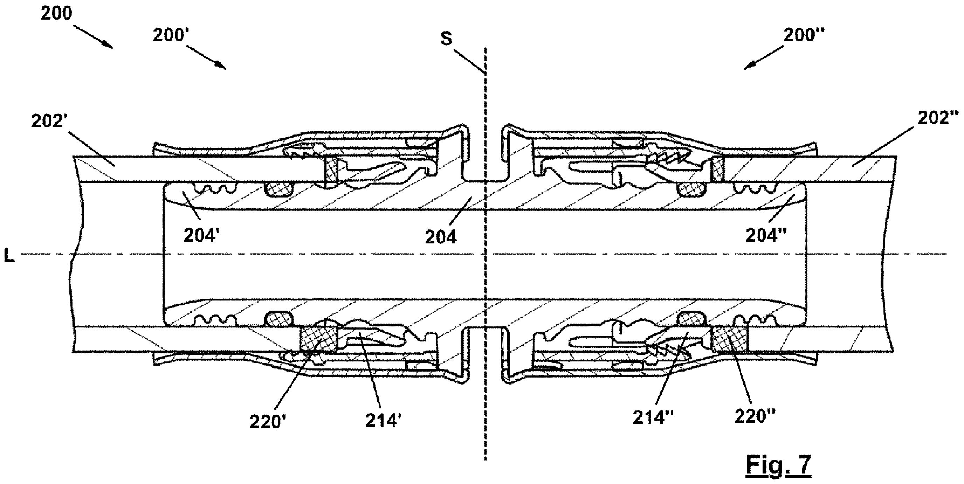

In Figur 7 ist eine zweite Ausführungsform einer erfindungsgemäßen Verbindungsanordnung dargestellt. Die Ausführungsform gemäß Figur 7 entspricht im Wesentlichen der Ausführungsform gemäß den Figuren 1 bis 5, 6a und 6b. Daher sind in Figur 7 analoge Teile mit den gleichen Bezugszeichen versehen, wie in den Figuren 1 bis 5, 6a und 6b, jedoch vermehrt um die Zahl 100. Darüber hinaus wird die Verbindungsanordnung 200 gemäß Figur 7 im Folgenden nur insoweit beschrieben werden, als sie sich von der Verbindungsanordnung 100 der Figuren 1 bis 5, 6a und 6b unterscheidet, auf deren Beschreibung hiermit ansonsten ausdrücklich verwiesen sei.

Ein erster Unterschied der Verbindungsanordnung 200 gemäß Figur 7 gegenüber der Verbindungsanordnung 100 der Figuren 1 bis 5, 6a und 6b besteht darin, dass sie nicht zum Anschluss eines Rohrs an einer übergeordneten Baueinheit dient, sondern zur Verbindung zweier Rohre. Hierzu ist sie als Doppelverbindungsanordnung zweier Einzelverbindungsanordnungen 200' und 200" ausgebildet, die sämtliche Komponenten doppelt, nämlich in einer bezüglich der Ebene S gespiegelten Anordnung, umfasst, wobei lediglich die beiden Stützkörper 204' und 204" miteinander einstückig verbunden und somit als Doppelstützkörper 204 ausgebildet sind.

An dieser Stelle sein angemerkt, dass die Einzelverbindungsanordnung 200' die Montagestellung zeigt, während die Einzelverbindungsanordnung 200" die Montagebereitschaftsstellung zeigt.

Ein zweiter Unterschied der Verbindungsanordnung 200 gemäß Figur 7 gegenüber der Verbindungsanordnung 100 der Figuren 1 bis 5, 6a und 6b besteht darin, dass die Schiebevorrichtungen 214' und 214" an ihrem dem Rohr 202' bzw. 202" zugewandten Ende jeweils mit einem Pufferelement 220' bzw. 220" versehen sind. Für den Fall, dass das Rohr 202' bzw. 202" nicht exakt orthogonal zur Längsachse L abgelängt worden ist, übernimmt das Pufferelement 220' bzw. 220" die Funktion, einen Längenausgleich zwischen dem Rohr 202' bzw. 202" und der zugeordneten Schiebevorrichtung 214' bzw. 214" bereitzustellen, indem es von dem längeren Umfangsabschnitt (in Figur 7 oben dargestellt) stärker zusammengedrückt wird als von dem kürzeren Umfangsabschnitt (in Figur 7 unten dargestellt). Auf diese Weise können von dem schräg abgelängten Rohr 202' bzw. 202" herrührende Kippmomente auf die Schiebevorrichtung 214' bzw. 214" und das einseitige Herausdrücken der Dichtungseinheit 210' bzw. 210" zumindest reduziert werden.

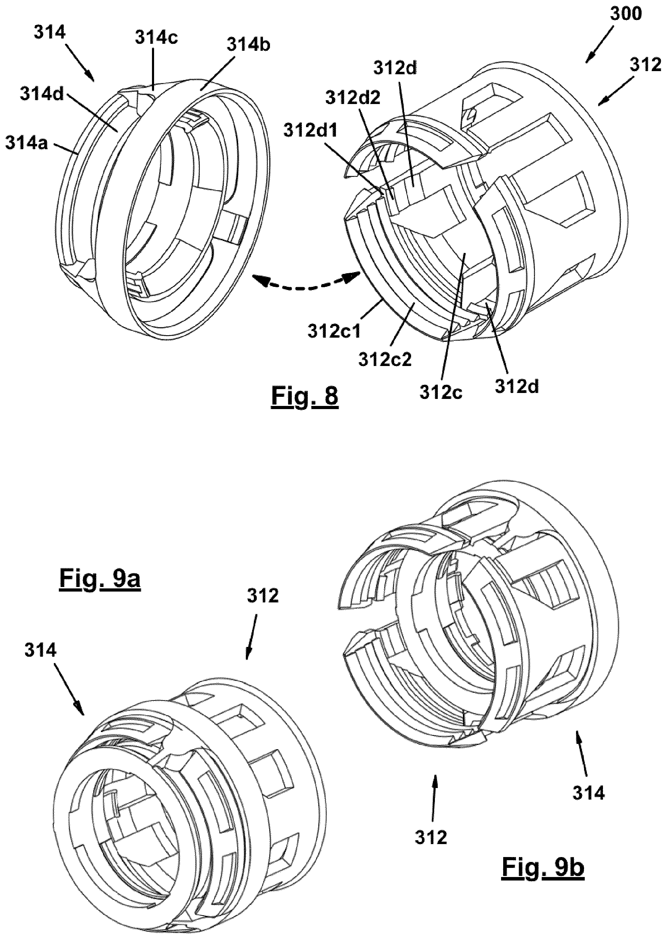

In den Figuren 8, 9a und 9b ist eine dritte Ausführungsform einer erfindungsgemäßen Verbindungsanordnung dargestellt. Die Ausführungsform gemäß den Figuren 8, 9a und 9b entspricht im Wesentlichen der Ausführungsform gemäß den Figuren 1 bis 5, 6a und 6b. Daher sind in den Figuren 8, 9a und 9b analoge Teile mit den gleichen Bezugszeichen versehen, wie in den Figuren 1 bis 5, 6a und 6b, jedoch vermehrt um die Zahl 200. Darüber hinaus wird die Verbindungsanordnung 300 gemäß den Figuren 8, 9a und 9b im Folgenden nur insoweit beschrieben werden, als sie sich von der Verbindungsanordnung 100 der Figuren 1 bis 5, 6a und 6b unterscheidet, auf deren Beschreibung hiermit ansonsten ausdrücklich verwiesen sei.

Der einzige Unterschied zwischen der Verbindungsanordnung 300 gemäß den Figuren 8, 9a und 9b und der Verbindungsanordnung 100 der Figuren 1 bis 5, 6a und 6b besteht darin, dass die Klemmvorrichtung 312 und die Schiebevorrichtung 314 anders ausgebildet sind als die Klemmvorrichtung 112 und die Schiebevorrichtung 114 der Verbindungsanordnung 100. Und zwar verfügt die Klemmvorrichtung 312 über zwei Arten von Klemmelementen, nämlich über drei erste Klemmelemente 312c und sechs zweite Klemmelemente 312d. Diese sind in drei Gruppen zu je einem ersten Klemmelement 312c und zwei zweiten Klemmelementen 312d angeordnet, wobei die beiden zweiten Klemmelemente 312d das zugeordnete erste Klemmelement 312c in Umfangsrichtung flankieren, d.h. zwischen sich aufnehmen. Darüber hinaus sind die ersten Klemmelemente 312c länger ausgebildet als die zweiten Klemmelemente 312d, so dass ihre Widerhaken 312c2 tragenden freien Enden 312c1 weiter vom Basisring 312a entfernt angeordnet sind als die Widerhaken 312d2 tragenden freien Enden 312d1 der zweiten Klemmelemente 312d. Ferner erstrecken sich die freien Enden 312c1 der ersten Klemmelemente 312c in Umfangsrichtung über einen größeren Winkelbereich als die freien Enden 312d1 der zweiten Klemmelemente 312d, vorzugsweise bis über die zweiten Klemmelemente 312d. Entsprechend verfügt die Schiebevorrichtung 314 über lediglich drei Verbindungsstege 314c, welche den Basisring 314a und den Anzeigering 314b miteinander verbinden und mit diesen drei axiale Durchgänge 314d für die drei vorstehend angesprochenen Klemmelementgruppen 312d-312c-312d bilden.

Die zweiten Klemmelemente 312d haben aufgrund ihrer geringeren Länge einen höheren Kraftschluss mit dem (in den Figuren 8, 9a und 9b nicht dargestellten) Rohr. Ihre Aufgabe besteht darin, dann, wenn auf das Rohr ein axialer Zug ausgeübt wird, eine kraftschlüssige Verbindung mit dem Rohr einzugehen, bis die ersten Klemmelemente 312c in einen Bereich (in den Figuren 8, 9a und 9b ebenfalls nicht dargestellten, in Figur 3 jedoch mit 108b bezeichnet) der Außenhülse gelangen, in welchem sich diese konisch verjüngt, und somit von der Außenhülse formschlüssig in die Außenfläche des Rohrs hineingedrückt werden. Da somit beim Einführen des Rohrs in die Verbindungsanordnung 300 auf eine kraftschlüssige Verbindung der ersten Klemmelemente 312c mit dem Rohr verzichtet werden kann, kann die zum Einführen des Rohrs erforderliche Einschubkraft gering gehalten werden.

Nachzutragen ist noch, dass auch die Schiebevorrichtung 314 mit einem Pufferelement analog dem Pufferelement 120' bzw. 120" ausgestattet sein kann.

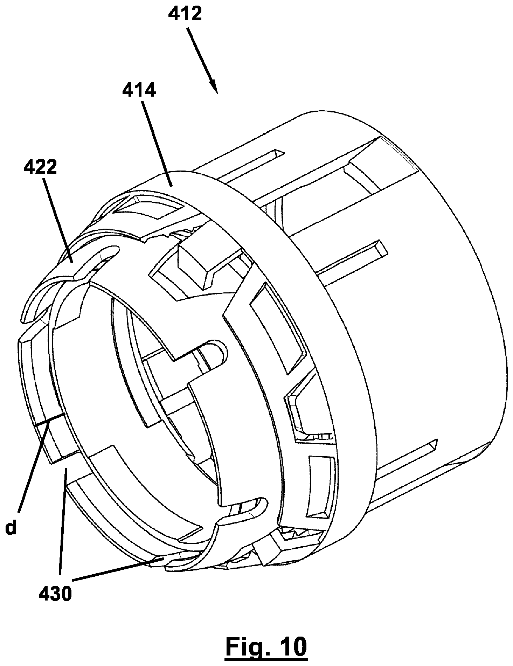

In den Figuren 10 bis 12 ist eine weitere Ausführungsform einer erfindungsgemäßen Verbindungsanordnung dargestellt. Die Ausführungsform gemäß den Figuren 10 bis 12 entspricht im Wesentlichen der Ausführungsform gemäß den Figuren 1 bis 5, 6a und 6b. Daher sind in den Figuren 10 bis 12 analoge Teile mit den gleichen Bezugszeichen versehen, wie in den Figuren 1 bis 5, 6a und 6b, jedoch vermehrt um die Zahl 300. Darüber hinaus wird die Verbindungsanordnung 400 gemäß den Figuren 10 bis 12 im Folgenden nur insoweit beschrieben werden, als sie sich von der Verbindungsanordnung 100 der Figuren 1 bis 5, 6a und 6b unterscheidet, auf deren Beschreibung hiermit ansonsten ausdrücklich verwiesen sei. Es sei weiter darauf hingewiesen, dass auch Merkmale der hierin beschriebenen anderen Ausführungsformen auf die Verbindungsanordnung 400 anwendbar sind, soweit sie nicht mit den Merkmalen der Verbindungsanordnung 400 kollidieren.

Analog zu den voranstehend erwähnten Klemmvorrichtungen umfasst auch die Klemmvorrichtung 412 der Figur 10 eine Schiebevorrichtung 414. Die Schiebevorrichtung 414 ist mit einem Ausgleichselements 422 verbunden, wobei ein Abschnitt der Innenseite des Ausgleichselements 422 mit einem Abschnitt der Außenseite der Schiebevorrichtung 414 ein Kugelgelenk 428 bildet, so dass das Ausgleichselement 422 auf der Schiebevorrichtung 414 durch das Kugelgelenk 428 rotatorisch um zumindest zwei der drei möglichen Rotationsachsen verlagerbar ist.

Wie in Figur 10 ferner zu erkennen ist, steht das Ausgleichselement 422, in einem Zustand, in welchem die Mittelachsen des Ausgleichselements 422 und der Schiebevorrichtung 414 parallel zueinander ausgerichtet sind, insbesondere aufeinander fallen, um einen vorbestimmten Abstand d in Richtung eines einzuführenden Rohrs 402 über.

Das Ausgleichselement 422 weist ferner Ausnehmungen 430 auf, welche an dem einem einzuführenden Rohr 402 zugeordneten Ende des Ausgleichselements 422 angeordnet sind und über einen Umfang des Ausgleichselements 422 verteilt sind. Insbesondere können die Ausnehmungen 430 über den Umfang des Ausgleichselements 422 gleichmäßig verteilt sein. Die Ausnehmungen 430 gestatten dem einem einzuführenden Rohr 402 zugeordneten Ende in seinem Durchmesser aufgeweitet zu werden, um das Ausgleichselement 422 teilweise oder vollständig auf die Schiebevorrichtung 414 aufschieben zu können. Auf diese Weise kann eine Gesamtlänge der Kombination aus Schiebevorrichtung 414 und Ausgleichselement 422 im Montagezustand verkürzt werden.

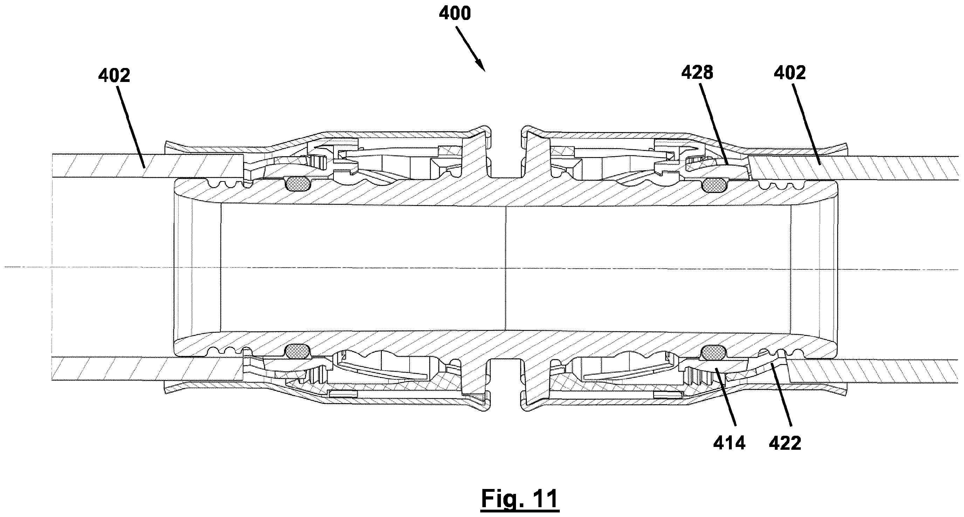

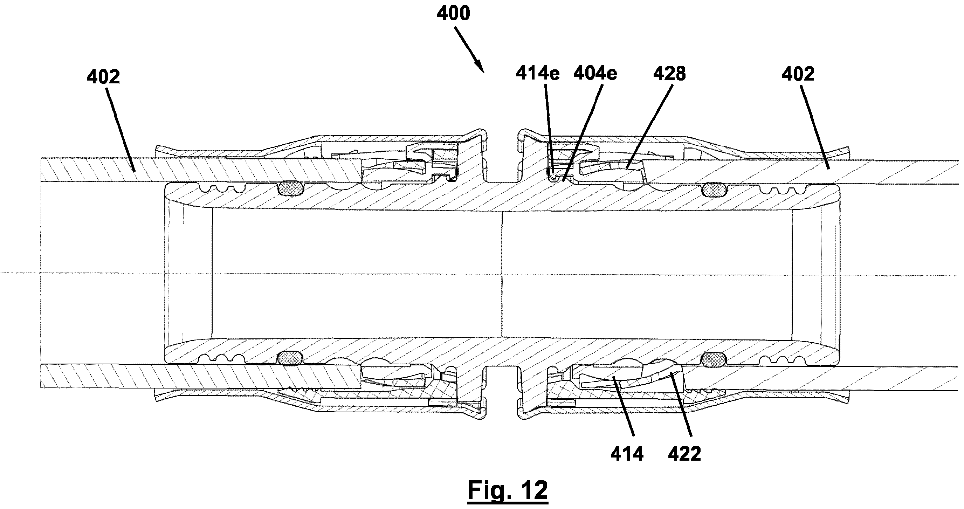

Die Figuren 11 und 12 zeigen nun die erfindungsgemäße Verbindungsanordnung 400, wobei die in den Figuren 11 und 12 jeweils links dargestellten Hälften der Verbindungsanordnung 400 eine Montage eines gerade abgelängten Rohrs 402 und die in den Figuren 11 und 12 jeweils rechts dargestellten Hälften der Verbindungsanordnung 400 eine Montage eines schräg abgelängten Rohrs 402 zeigen. Darüber hinaus zeigt Figur 11 einen beginnenden Montagezustand, wohingegen Figur 12 einen abgeschlossenen Montagezustand zeigt. Da die Vorteile der Klemmvorrichtung 412 insbesondere bei schräg abgelängten Rohrenden zum Tragen kommen, wird die Beschreibung der Figuren 11 und 12 auf deren rechte Hälften konzentriert werden, wobei dies analog auch auf die linken Hälften der Figuren 11 und 12 anwendbar ist.

Wie in Figur 11 zu erkennen ist, trifft das in die Verbindungsanordnung 400 eingeführte Rohr 402 zunächst auf das Ausgleichselement 422, welches entsprechend der Schräge des Endes des Rohrs 402 relativ zu der Schiebevorrichtung 414 verschwenkt wird, bis das Ende des Ausgleichselements 422, welches zu dem Rohr 402 weist, mit dem Rohr 402 großflächig in Kontakt tritt, das heißt, je nach Verschwenkungswinkel, bis hin zu einem vollständigen Kontaktieren dieses Endes des Ausgleichselements 422 mit dem Ende des Rohrs 402, natürlich mit Ausnahme der eventuell vorhandenen Ausnehmungen 430.

Wird das Rohr 402 nun weiter in die Verbindungsanordnung 400 eingeschoben, so erreicht es den in Figur 12 finalen Montagezustand. Dabei ist ein in dieser Ausführungsform bereitgestelltes Rastelement 414e mit einem entsprechenden Vorsprung 404e verrastet.

Da das Ausgleichselement 422 in den rechten Hälften der Figuren 11 und 12 eine maximale Verschwenkungsstellung gegenüber der Schiebevorrichtung 414 eingenommen hat, kann es im abgeschlossenen Montagezustand nicht weiter auf die Schiebevorrichtung 414 aufgeschoben werden. Es ist jedoch auf der linken Hälfte der Figur 12 zu erkennen, wie das Ausgleichselement 422 auf die Schiebevorrichtung 414 vollständig aufgeschoben werden kann, wenn das Ausgleichselement 422 nicht maximal, oder wie in der linken Hälfte der Figur 12 nicht, gegenüber der Schiebevorrichtung 414 verschwenkt worden ist.

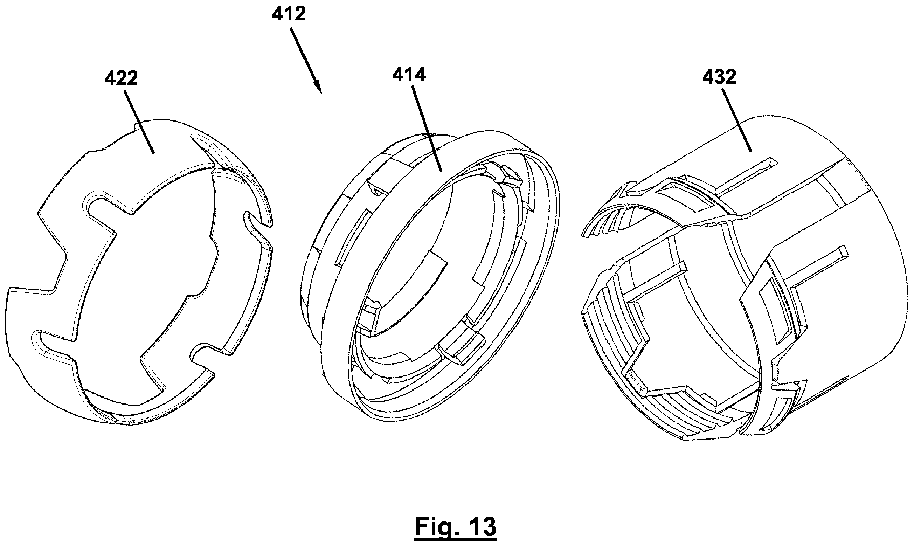

Figur 13 zeigt die in Figur 10 dargestellte Ausführungsform als einzelne Komponenten der Klemmvorrichtung 412, nämlich Ausgleichselement 422, Schiebevorrichtung 414, und ein dazugehöriges Basiselement 432.

## Patentansprüche

1. Verbindungsanordnung (100) zum Anschließen des freien Endes eines nicht zur Verbindungsanordnung (100) gehörenden Rohres (102), umfassend
• einen rohrförmigen Stützkörper (104) und
• eine Außenhülse (108), welche zumindest teilweise um den Stützkörper (104) herum angeordnet ist, an dem Stützkörper (104) gehalten ist und mit dem Stützkörper (104) einen Aufnahmeraum (106) bildet, in welchen das Rohr (102) einführbar ist, und
• eine in dem Aufnahmeraum (106) aufgenommene Klemmvorrichtung (112) mit wenigstens einem Klemmelement (112b), welches dazu bestimmt ist, mit einem in den Aufnahmeraum (106) eingeführten Rohr (102) derart in Eingriff zu treten, dass es sich einer Bewegung des Rohrs (102) aus dem Aufnahmeraum (106) heraus widersetzt,
• eine Anzeigevorrichtung (118), welche von dem in den Aufnahmeraum (106) eingeführten Rohr (102) in eine Anzeigestellung überführbar ist, in der sie mit wenigstens einer in der Außenhülse (108) vorgesehenen Öffnung (108a) fluchtet, und
• eine Dichtungsvorrichtung (110), welche in einer in der äußeren Oberfläche (104d) des Stützkörpers (104) ausgebildeten Nut (104c) aufgenommen und dazu bestimmt ist, mit der Innenfläche (102a) eines in den Aufnahmeraum (106) eingeführten Rohrs (102) in Dichtungseingriff zu treten,
wobei die Verbindungsanordnung (100) ferner eine Schutzvorrichtung (116) umfasst, welche die Dichtungsvorrichtung (110) in einer Montagebereitschaftsstellung in der Nut (104c) überdeckt und mit der Anzeigevorrichtung (116) betriebsmäßig zu einer Schiebevorrichtung (114) verbunden ist,
**dadurch gekennzeichnet, dass** die Schiebevorrichtung (114) einen Basisring (114a) aufweist, der über Verbindungsstege (114c) mit der Anzeigevorrichtung (118) verbunden ist,
dass die Schiebevorrichtung (114) einen oder mehrere axiale Durchgänge (114d) aufweist, wobei wenigstens ein axialer Durchgang (114d) von wenigstens einem Klemmelement (112b) der Klemmvorrichtung (112) durchsetzt ist, und
dass die Klemmvorrichtung (112) einen Basisring (112a) aufweist, von dem eine Mehrzahl von Klemmelementen (112b) in axialer Richtung absteht.

2. Verbindungsanordnung nach Anspruch 1,
**dadurch gekennzeichnet, dass** die Dichtungsvorrichtung (110) in der Montagebereitschaftsstellung von der Schiebevorrichtung (114) in der Nut (104c) radial komprimiert ist.

3. Verbindungsanordnung nach Anspruch 1 oder 2,
**dadurch gekennzeichnet, dass** an der dem Rohr (202', 202") zugewandten Ende der Schiebevorrichtung (214', 214") ein elastisches Pufferelement (220', 220") angeordnet ist.

4. Verbindungsanordnung nach Anspruch 3,
**dadurch gekennzeichnet, dass** das Pufferelement (220', 220") und die Schiebevorrichtung (214', 214") miteinander einstückig als Zweikomponenten-Spritzgussteil ausgebildet sind.

5. Verbindungsanordnung nach einem der Ansprüche 1 bis 4,
**dadurch gekennzeichnet, dass** mit der Schiebevorrichtung (414) ein Ausgleichselement (422) verbunden ist, welches mit der Schiebevorrichtung (414) ein Kugelgelenk (428) bildet, und welches dazu eingerichtet ist, mit einem in die Verbindungsanordnung einzuführenden Ende des Rohrs (402) in Kontakt zu treten.

6. Verbindungsanordnung nach Anspruch 5,
**dadurch gekennzeichnet, dass** das Ausgleichselement (422) an seiner zu dem in die Verbindungsanordnung einzuführenden Ende des Rohrs (402) weisenden Seite eine Mehrzahl von in Umfangsrichtung des Ausgleichselements (422) verteilten Ausnehmungen (430) aufweist.

7. Verbindungsanordnung nach einem der Ansprüche 1 bis 6,
**dadurch gekennzeichnet, dass** die Schiebevorrichtung (114) wenigstens ein Rastelement (114e) umfasst, welches dazu ausgebildet und bestimmt ist, in der Anzeigestellung mit einem zugeordneten Gegenrastelement (104e) zusammenzuwirken.

8. Verbindungsanordnung nach Anspruch 7,
**dadurch gekennzeichnet, dass** die Rastelemente (114e) von dem Basisring (114a) ausgehen.

9. Verbindungsanordnung nach einem der Ansprüche 1 bis 8,
**dadurch gekennzeichnet, dass** der Stützkörper (104) eine Ringschulter (104b) aufweist, an der die Schiebevorrichtung (114) in der Anzeigestellung anliegt.

10. Verbindungsanordnung nach einem der Ansprüche 1 bis 9,
**dadurch gekennzeichnet, dass** die Schiebevorrichtung (114) mit der Klemmvorrichtung (112) im Sinne der Zentrierung der Klemmvorrichtung (112) relativ zur Längsachse (L) des Stützkörpers (104) zusammenwirkt.

11. Verbindungsanordnung nach einem der Ansprüche 1 bis 10, **dadurch gekennzeichnet, dass** wenigstens ein Klemmelement (112b) seinem freien Ende (112b1) benachbart an einem radial äußeren Oberflächenabschnitt einen Rückhaltevorsprung (112b3) aufweist.

12. Verbindungsanordnung nach einem der vorherigen Ansprüche, **dadurch gekennzeichnet, dass** die Mehrzahl von Klemmelementen wenigstens ein erstes Klemmelement (312c) und wenigstens ein zweites Klemmelement (312d) umfasst, wobei das wenigstens eine erste Klemmelement (312c) von dem Basisring (312a) um eine größere Länge absteht als das wenigstens eine zweite Klemmelement (312d).

13. Verbindungsanordnung nach Anspruch 12,
**dadurch gekennzeichnet, dass** sich ein zum Klemmeingriff mit dem Rohr bestimmtes freies Ende des wenigstens einen ersten Klemmelements (312c) über einen größeren Umfangswinkel erstreckt als ein zum Klemmeingriff mit dem Rohr bestimmtes freies Ende des wenigstens einen zweiten Klemmelements (312d).

14. Verbindungsanordnung nach einem der Ansprüche 1 bis 13,
**dadurch gekennzeichnet, dass** die Farbe der äußeren Oberfläche der Außenhülse (108) und die Farbe der äußeren Oberfläche der Anzeigevorrichtung (118) zueinander kontrastierende Farben sind.

## Claims

1. Connecting arrangement (100) for connecting the free end of a pipe (102) which is not part of the connecting arrangement (100), comprising
• a tubular support body (104) and
• an outer sleeve (108) which is arranged at least partially around the support body (104), is held on the support body (104) and forms, together with the support body (104), a receiving space (106) into which the pipe (102) can be inserted, and
• a clamping device (112) which is received in the receiving space (106) and comprises at least one clamping element (112b) that is intended to engage with a pipe (102) inserted into the receiving space (106), in such a way that said element opposes a movement of the pipe (102) out of the receiving space (106),
• an indicating device (118) which can be transferred, by the pipe (102) inserted into the receiving space (106), into an indicating position in which said device is aligned with at least one opening (108a) provided in the outer sleeve (108), and
• a sealing device (110) which is received in a groove (104c) formed in the outer surface (104d) of the support body (104) and is intended to sealingly engage with the inner surface (102a) of a pipe (102) inserted into the receiving space (106),
the connecting arrangement (100) further comprising a protective device (116) which covers the sealing device (110) in the groove (104c) in a ready-to-install position and is operatively connected to the indicating device (116) to form a sliding device (114),
**characterised in that** the sliding device (114) has a base ring (114a) which is connected to the indicating device (118) via connecting portions (114c),
**in that** the sliding device (114) has one or more axial passages (114d), at least one clamping element (112b) of the clamping device (112) passing through at least one axial passage (114d), and
**in that** the clamping device (112) has a base ring (112a) from which a plurality of clamping elements (112b) protrudes in the axial direction.

2. Connecting arrangement according to claim 1,
**characterised in that** the sealing device (110) is radially compressed in the groove (104c) by the sliding device (114) in the ready-to-install position.

3. Connecting arrangement according to either claim 1 or claim 2,
**characterised in that** a resilient buffer element (220', 220") is arranged on the end of the sliding device (214', 214") nearer the pipe (202', 202").

4. Connecting arrangement according to claim 3,
**characterised in that** the buffer element (220', 220") and the sliding device (214', 214") are formed integrally with one another as a two-component injection moulded part.

5. Connecting arrangement according to any of claims 1 to 4,
**characterised in that** a compensating element (422) is connected to the sliding device (414), which element, together with the sliding device (414), forms a ball joint (428), and which is designed to come into contact with an end of the pipe (402) to be inserted into the connecting arrangement.

6. Connecting arrangement according to claim 5,
**characterised in that** the compensating element (422) has, on its side facing the end of the pipe (402) to be inserted into the connecting arrangement, a plurality of recesses (430) distributed in the circumferential direction of the compensating element (422).

7. Connecting arrangement according to any of claims 1 to 6,
**characterised in that** the sliding device (114) comprises at least one latching element (114e) which is designed and intended to interact with an associated mating latching element (104e) in the indicating position.

8. Connecting arrangement according to claim 7,
**characterised in that** the latching elements (114e) project from the base ring (114a).

9. Connecting arrangement according to any of claims 1 to 8,
**characterised in that** the supporting body (104) has an annular shoulder (104b) against which the sliding device (114) rests in the indicating position.

10. Connecting arrangement according to any of claims 1 to 9,
**characterised in that** the sliding device (114) interacts with the clamping device (112) in terms of centring the clamping device (112) relative to the longitudinal axis (L) of the support body (104).

11. Connecting arrangement according to any of claims 1 to 10,
**characterised in that** at least one clamping element (112b) has a retaining projection (112b3) adjacent to its free end (112b1) on a radially outer surface portion.

12. Connecting arrangement according to any of the preceding claims, **characterised in that** the plurality of clamping elements comprises at least a first clamping element (312c) and at least a second clamping element (312d), the at least a first clamping element (312c) protruding from the base ring (312a) by a greater length than the at least a second clamping element (312d).

13. Connecting arrangement according to claim 12,
**characterised in that** a free end of the at least a first clamping element (312c) intended for clamping engagement with the pipe extends over a greater circumferential angle than a free end of the at least a second clamping element (312d) intended for clamping engagement with the pipe.

14. Connecting arrangement according to any of claims 1 to 13,
**characterised in that** the colour of the outer surface of the outer sleeve (108) and the colour of the outer surface of the indicating device (118) are mutually contrasting colours.

## Revendications

1. Ensemble de raccordement (100) pour raccorder l'extrémité libre d'un tube (102) n'appartenant pas à l'ensemble de raccordement (100), comprenant
• un corps d'appui tubulaire (104) et
• une gaine extérieure (108) qui est disposée au moins partiellement autour du corps d'appui (104), est maintenue sur le corps d'appui (104) et forme avec le corps d'appui (104) un espace de réception (106) dans lequel le tube (102) peut être introduit, et
• un dispositif de serrage (112) logé dans l'espace de réception (106) et comprenant au moins un élément de serrage (112b) qui est destiné à venir en prise avec un tube (102) introduit dans l'espace de réception (106) de telle sorte qu'il s'oppose à un mouvement du tube (102) hors de l'espace de réception (106),
• un dispositif d'affichage (118) qui peut être transféré du tube (102) inséré dans l'espace de réception (106) à une position d'affichage dans laquelle il est aligné avec au moins une ouverture (108a) prévue dans la gaine extérieure (108), et un dispositif d'étanchéité (110), qui est reçu dans une rainure (104c) formée dans la surface extérieure (104d) du corps d'appui (104) et qui est destiné à venir en contact d'étanchéité avec la surface intérieure (102a) d'un tube (102) inséré dans l'espace de réception (106),
dans lequel l'ensemble de raccordement (100) comprend en outre un dispositif de protection (116) qui recouvre le dispositif d'étanchéité (110) dans une position d'attente de montage dans la rainure (104c) et qui est relié de manière opérationnelle au dispositif d'indication (116) pour former un dispositif de coulissement (114),
**caractérisé en ce que** le dispositif de coulissement (114) comprend une bague de base (114a) qui est reliée au dispositif d'affichage (118) par des entretoises de liaison (114c), **en ce que** le dispositif de coulissement (114) comprend un ou plusieurs passages axiaux (114d), au moins un passage axial (114d) étant traversé par au moins un élément de serrage (112b) du dispositif de serrage (112), et **en ce que** le dispositif de serrage (112) présente une bague de base (112a) de laquelle une pluralité d'éléments de serrage (112b) font saillie dans la direction axiale.

2. Ensemble de raccordement selon la revendication 1,
**caractérisé en ce que** le dispositif d'étanchéité (110) est comprimé radialement dans la rainure (104c) par le dispositif de coulissement (114) en position d'attente de montage.

3. Ensemble de raccordement selon la revendication 1 ou 2,
**caractérisé en ce qu'**un élément tampon élastique (220', 220") est disposé à l'extrémité du dispositif de coulissement (214', 214") qui est tournée vers le tube (202', 202").

4. Ensemble de raccordement selon la revendication 3,
**caractérisé en ce que** l'élément tampon (220", 220") et le dispositif de coulissement (214', 214") sont formés d'un seul tenant l'un avec l'autre sous la forme d'une pièce bi-composante moulée par injection.

5. Ensemble de raccordement selon l'une quelconque des revendications 1 à 4, **caractérisé en ce que** le dispositif de coulissement (414) est associé à un élément d'équilibrage (422) qui forme une rotule (428) avec le dispositif de coulissement (414) et qui est adapté pour venir en contact avec une extrémité du tube (402) à insérer dans l'ensemble de raccordement.

6. Ensemble de raccordement selon la revendication 5,
**caractérisé en ce que** l'élément d'équilibrage (422) comporte, sur sa face tournée vers l'extrémités du tube (402) à insérer dans l'ensemble de raccordement, une pluralité d'évidements (430) répartis dans la direction circonférentielle de l'élément d'équilibrage (422).

7. Ensemble de raccordement selon l'une quelconque des revendications 1 à 6, **caractérisé en ce que** le dispositif de coulissement (114) comprend au moins un élément d'encliquetage (114e) configuré et destiné à coopérer avec un élément d'encliquetage complémentaire associé (104e) dans la position d'indication.

8. Ensemble de raccordement selon la revendication 7,
**caractérisé en ce que** les éléments d'encliquetage (114e) s'étendent à partir de la bague de base (114a).

9. Ensemble de raccordement selon l'une des revendications 1 à 8,
**caractérisé en ce que** le corps d'appui (104) comporte un épaulement annulaire (104b) contre lequel le dispositif de coulissement (114) est en appui dans la position d'indication.

10. Ensemble de raccordement selon l'une des revendications 1 à 9,
**caractérisé en ce que** le dispositif de coulissement (114) coopère avec le dispositif de serrage (112) dans le sens du centrage du dispositif de serrage (112) par rapport à l'axe longitudinal (L) du corps d'appui (104).

11. Ensemble de raccordement selon l'une quelconque des revendications 1 à 10, **caractérisé en ce qu'**au moins un élément de serrage (112b) comporte une protubérance de retenue (112b3) adjacente à son extrémité libre (112b1) sur une portion de surface radialement extérieure.

12. Ensemble de raccordement selon l'une quelconque des revendications précédentes, **caractérisé en ce que** la pluralité d'éléments de serrage comprend au moins un premier élément de serrage (312c) et au moins un deuxième élément de serrage (312d), ledit au moins un premier élément de serrage (312c) dépassant de la bague de base (312a) d'une longueur supérieure à celle dudit au moins un deuxième élément de serrage (312d).

13. Ensemble de raccordement (100) pour connecter l'ensemble de raccordement selon la revendication 12,
**caractérisé en ce qu'**une extrémité libre dudit au moins un premier élément de serrage (312c) destinée à venir en prise par serrage avec le tube s'étend sur un angle circonférentiel plus grand qu'une extrémité libre dudit au moins un deuxième élément de serrage (312d) destinée à venir en prise par serrage avec le tube.

14. Ensemble de raccordement selon l'une quelconque des revendications 1 à 13, **caractérisé en ce que** la couleur de la surface extérieure de la gaine extérieure (108) et la couleur de la surface extérieure du dispositif d'affichage (118) sont des couleurs contrastées entre elles.
